# EUROPEAN PATENT APPLICATION

(11) **EP 3 873 037 A1**
(43) Date of publication of application: **01.09.2021**
(21) Application number: 19888000.7
(22) Date of filing: 07.09.2019
(51) Int. Cl.: H04L 12/437

(54) **COMMUNICATION METHOD AND APPARATUS**

(30) Priority: 21.11.2018 CN 201811394199
(71) Applicant: Huawei Technologies Co., Ltd., Longgang District Shenzhen, Guangdong 518129 (CN)
(72) Inventor: YE, Qing, Shenzhen, Guangdong 518129 (CN); YE, Jian, Shenzhen, Guangdong 518129 (CN); QIAN, Hui, Shenzhen, Guangdong 518129 (CN)
(74) Representative: Thun, Clemens
(86) International application number: PCT/CN2019/104811
(87) International publication number: WO 2020/103530

(57) **Abstract**

This application provides a method for transmitting data on a FlexE cross ring. At least three nodes forming the FlexE cross ring include a first node, a second node, and a third node. There is a protection path and a working path between any two adjacent nodes, and the protection path is a backup path of the working path. In the solution provided in this application, the protection path between nodes is established on the FlexE cross ring. In this way, when a FlexE group between any two adjacent nodes on the FlexE cross ring is faulty, a node on the FlexE cross ring can still complete data forwarding. For example, when a FlexE group between the first node and the third node is faulty, the first node may return data to the second node through a protection path between the first node and the second node, so that the second node transmits the data to the third node through another path, to improve reliability of the FlexE cross ring.

## Description

This application claims priority to Chinese Patent Application No. 201811394199.5, filed with the China National Intellectual Property Administration on November 21, 2018 and entitled "COMMUNICATION METHOD AND COMMUNICATIONS APPARATUS", which is incorporated herein by reference in its entirety.

### TECHNICAL FIELD

This application relates to the communications field, and in particular, to a ring network protection method and apparatus applied to a flexible Ethernet cross ring.

### BACKGROUND

A flexible Ethernet (flexible ethernet, FlexE) is a new type of Ethernet developed based on a conventional Ethernet. In the FlexE, data is transmitted through a FlexE tunnel. To improve FlexE reliability, an available method is to establish an end to end (end to end, E2E) protection path, in other words, establish a backup FlexE tunnel. When a working path (namely, a FlexE tunnel in use) is faulty, one end of an E2E transmission path may transmit data through the protection path, and the one end of the E2E transmission path is, for example, a provider edge (provider edge, PE) device. However, if the protection path is also faulty, the FlexE cannot transmit data. Consequently, reliability of the FlexE is reduced.

For a ring network using a FlexE technology, how to provide a more reliable and effective ring network protection method becomes a technical problem that needs to be currently resolved.

### SUMMARY

This application provides a communication processing method and apparatus applied to a flexible Ethernet cross ring. FlexE reliability can be enhanced by configuring a protection path between two adjacent network devices.

According to a first aspect, a communication processing method is provided, applied to a ring network. The ring network is a FlexE cross ring. The FlexE cross ring includes a first network device, a second network device, and a third network device. The first network device is adjacent to the second network device, and the first network device is adjacent to the third network device. There are a first FlexE group and a second FlexE group between the first network device and the second network device. The first FlexE group is used to carry a first client, and the second FlexE group is used to carry a second client. There is a third FlexE group between the first network device and the third network device, and the third FlexE group is used to carry a third client. The method includes: The first network device determines that the third FlexE group is faulty. The first network device deletes a FlexE cross between the first client and the third client. The first network device establishes a FlexE cross between the first client and the second client. The first network device switches a transmission path of service data from a working path to a protection path. The working path includes the third FlexE group. The protection path includes the second FlexE group.

The first FlexE group and the second FlexE group may be a same link group, or may be different link groups. In the solution provided in this application, a protection path between network devices is established on the FlexE cross ring. In this way, when a transmission path (for example, the third FlexE group) between the first network device and the third network device is faulty, the first network device may establish a FlexE cross between a working client (for example, the first client) and a protection client (for example, the second client), to provide a backup transmission channel for the service data, and improve reliability of the FlexE cross ring.

In a possible design, after the first network device switches a transmission path of service data from a working path to a protection path, the method further includes: The first network device receives, through a first client, first FlexE data sent by the second network device; and the first network device forwards, through the second client, the first FlexE data by using the second FlexE group.

FlexE data is a code block that conforms to a FlexE protocol. The first network device returns the service data (for example, the first FlexE data) to the second network device through a protection client, and the second network device forwards the service data through the protection path, to improve reliability of the FlexE cross ring.

In a possible design, after a link fault of the third FlexE group is eliminated, the method further includes: The first network device deletes the FlexE cross between the first client and the second client. The first network device establishes a FlexE cross between the first client and the third client. The first network device switches the transmission path of the service data from the protection path to the working path.

The working path is usually a preferred transmission path between network devices. After the link fault of the third FlexE group is eliminated, the first network device may choose to switch the transmission path of the service data to the working path, to provide a preferred transmission resource for the service data.

In a possible design, after the first network device switches a transmission path of service data from a working path to a protection path, the method further includes: The first network device receives, through the first client, second FlexE data sent by the second network device; and the first network device forwards the second FlexE data to the third network device through the third client.

After completing path switching, the first network device forwards the second FlexE data through the working path, to provide a preferred transmission resource for the second FlexE data.

In a possible design, the third FlexE group is used to carry at least two clients, the at least two clients form a client bundling group, the client bundling group includes the third client and a client, the third client deploys an OAM detection, and the fourth client does not deploy the OAM detection; and that the first network device determines that the third FlexE group is faulty includes: The first network device determines, based on the OAM detection deployed by the third client, that the third FlexE group is faulty.

A working client group may be configured for a plurality of working clients between the first network device and the third network device, and a protection client group may be configured for a plurality of protection clients between the first network device and the third network device. If the first network device does not receive a response packet after sending an OAM packet to the third network device through a client in the client group, the first network device may determine that a FlexE group (for example, the third FlexE group) corresponding to the client group is faulty, and there is no need to send the OAM packet through each working client or protection client, to reduce consumption of a transmission resource.

According to a second aspect, this application provides a communications apparatus, including a memory. The memory includes a computer-readable instruction. The apparatus further includes a processor connected to the memory. The processor is configured to execute the computer-readable instruction, to perform operations in the method in any one of the first aspect or the possible designs of the first aspect.

According to a third aspect, this application further provides a computer-readable storage medium. The computer-readable storage medium stores computer program code. When the computer program code is executed by a processing unit or a processor, a communications apparatus is enabled to perform the method in any one of the first aspect or the possible designs of the first aspect.

According to a fourth aspect, a chip is provided. The chip stores an instruction. When the instruction is run on a communications apparatus or a network device, the chip is enabled to perform the method in any one of the first aspect or the possible designs of the first aspect.

According to a fifth aspect, a computer program product is provided. The computer program product includes computer program code. When the computer program code is run by a processor of a communications apparatus, the communications apparatus is enabled to perform the method in any one of the first aspect or the possible designs of the first aspect.

According to a sixth aspect, a network device is provided, and is configured to perform the method in any one of the first aspect or the possible designs of the first aspect.

According to a seventh aspect, a network device is provided, including the communications apparatus according to the second aspect.

### BRIEF DESCRIPTION OF DRAWINGS

FIG. 1 is a schematic diagram of a FlexE transmission manner applicable to this application;
FIG. 2 is a schematic diagram of a partial architecture applicable to a FlexE in this application;
FIG. 3 is a schematic diagram of a FlexE cross transmission technology applicable to this application;
FIG. 4 is a schematic diagram of a FlexE cross ring according to this application;
FIG. 5 is a schematic diagram of a method for adding service data to and removing service data from a ring according to this application;
FIG. 6 is a schematic diagram of a communication processing method according to this application;
FIG. 7 is a schematic diagram of a data forwarding method after a FlexE cross ring is faulty according to this application;
FIG. 8 is a schematic diagram of another FlexE cross ring according to this application;
FIG. 9 is a schematic diagram of another data forwarding method after a FlexE cross ring is faulty according to this application;
FIG. 10 is a schematic diagram of a node on which a client group is configured according to this application;
FIG. 11 is a schematic diagram of another node on which a client group is configured according to this application;
FIG. 12 is a schematic diagram of still another node on which a client group is configured according to this application;
FIG. 13 is a schematic diagram of a FlexE cross ring including nodes on which a client group is configured according to this application;
FIG. 14 is a schematic diagram of a data forwarding method after a FlexE cross ring including nodes on which a client group is configured is faulty according to this application;
FIG. 15 is a schematic diagram of an OAM packet format according to this application; and
FIG. 16 is a schematic diagram of a communications apparatus according to this application.

### DESCRIPTION OF EMBODIMENTS

Unless otherwise specified, ordinal numbers such as "1", "2", "first", and "second" mentioned in this application are used to distinguish between a plurality of objects, but are not used to limit a sequence of the plurality of objects. For example, a node 1 and a node 2 represent two different nodes, and there is no other limitation. First FlexE data and second FlexE data represent two different pieces of FlexE data, and there is no other limitation.

A node in this application may also be referred to as a network device or a network element. The node may be a router, a packet transport network device, a switch, a firewall, or the like. For ease of description, in this application, the devices mentioned above are collectively referred to as nodes.

The following describes technical solutions of this application with reference to accompanying drawings.

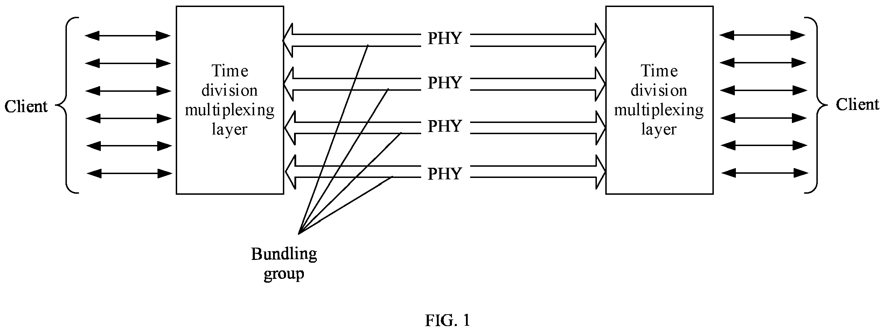

FIG. 1 is a schematic diagram of a FlexE transmission manner applicable to this application.

As shown in FIG. 1, based on a conventional Ethernet, concepts such as a FlexE group (FlexE Group), a client (client), and a flexible Ethernet time division multiplexing layer (FlexE shim, "time division multiplexing layer" for short below) are introduced to a FlexE. For ease of understanding of the technical solutions of this application, first, the concepts in this application are briefly described.

FlexE group: The FlexE group may also be referred to as a bundling group, and the FlexE group may be explained as a functional module including a plurality of physical layers (physical, PHY). The FlexE group in this application includes at least one link. For example, there may be 1 to 254 PHYs that support a rate of 100 gigabit Ethernet (gigabit ethernet, GE). The PHY may be defined as providing mechanical, electronic, functional, and normative characteristics for establishing, maintaining, and removing a physical link required for data transmission. The PHY may also be defined as a module having the foregoing characteristics. For example, the PHY may be a physical layer working component at a receive end and a transmit end and an optical fiber between the receive end and the transmit end, and the physical layer working component is, for example, a physical layer interface device.

A plurality of PHYs (namely, links) included in each FlexE group have a logical bundling relationship. The logical bundling relationship means that there may be no physical connection relationship between different PHYs. Therefore, the plurality of PHYs in the FlexE group may be physically independent. A network device in the FlexE may identify, by using numbers of PHYs, links included in a FlexE group, to implement logical bundling of the plurality of PHYs. For example, each PHY number may be identified by using a number ranging from 1 to 254, and 0 and 255 are reserved numbers. A number of a PHY may correspond to a port on the network device. Two adjacent network devices need to use a same number to identify a same PHY. Numbers of PHYs included in a FlexE group do not need to be consecutive. Usually, there is one FlexE group between two network devices. However, it is not limited in this application that there is only one FlexE group between two network devices. In other words, there may also be a plurality of FlexE groups between two network devices. One PHY may be used to carry at least one client, and one client may perform transmission on at least one PHY.

Client: The client may also be referred to as a client service, which can be explained as an Ethernet flow based on a physical address. Clients that perform sending through a same bundling group need to share a same clock, and these clients need to perform adaptation based on allocated slot rates. Bandwidth overheads of each client may be adapted by inserting/deleting an idle (idle) block. An identifier of the client is referred to as a client ID or a client identifier.

Time division multiplexing layer: The time division multiplexing layer is mainly used to slice data based on a same clock, encapsulate sliced data into slots (slot) obtained through division performed in advance, and then map slots obtained through division to PHYs in a bundling group based on a preconfigured slot configuration table for transmission. Each slot is mapped to one PHY in the bundling group.

The FlexE transmits data based on a time division multiplexing (time division multiplexing, TDM) technology, and an Ethernet packet is encoded, at a physical coding sublayer, into code blocks of a size of 64B/66B ("B" is short for "bit"), and these code blocks are mapped to a plurality of different PHYs based on slots.

The FlexE data in this application may also be referred to as a code block. As described above, the Ethernet packet is encoded into the code blocks of the size of 64B/66B ("B" is short for "bit") at the physical coding sublayer, and these code blocks are mapped to the plurality of different PHYs based on slots.

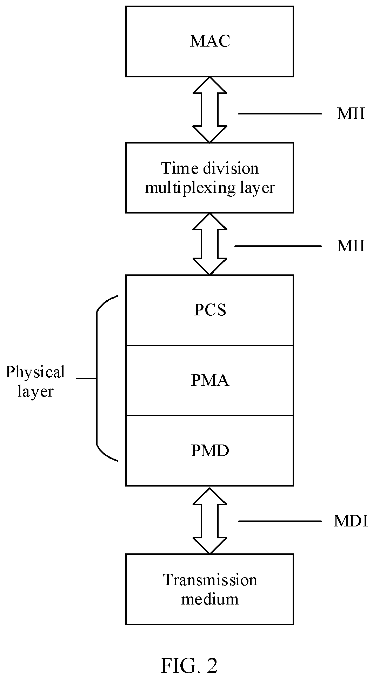

FIG. 2 is a schematic diagram of a partial architecture of a FlexE applicable to this application.

As shown in FIG. 2, the partial architecture of the FlexE includes a medium access control (medium access control, MAC) sublayer, a time division multiplexing layer, and a physical layer. The MAC sublayer is a sublayer of a data link layer, and is connected to a logical link control sublayer in the upstream. The physical layer may be further divided into a physical coding sublayer (physical coding sublayer, PCS), a physical medium attachment (physical medium attachment, PMA) sublayer, and a physical medium dependent (physical medium dependent, PMD) sublayer. The MAC sublayer is connected to the time division multiplexing layer through a medium independent interface (medium independent interface, MII), and the time division multiplexing layer is connected to the physical layer through a medium dependent interface. The physical layer is connected to a transmission medium in the downstream, and the physical layer is connected to the transmission medium through a medium dependent interface (medium dependent interface, MDI). Functions of the foregoing layers and interfaces are implemented by corresponding chips or modules. For example, functions corresponding to the PCS, the PMA sublayer, and the PMD sublayer may be separately implemented by different PHYs.

In a signal sending process, the PCS is configured to perform operations, for example, encoding, scrambling (scrambled), inserting an overhead (overhead OH), and inserting an alignment marker (alignment marker, AM), on the data. In a signal receiving process, the PCS performs reverse processing processes of the foregoing steps. Signals may be sent and received by different functional modules of the PCS.

Main functions of the PMA sublayer are link monitoring, carrier monitoring, coding and decoding, sending clock synthesis, and receiving clock recovery. Main functions of the PMD sublayer are: scrambling/descrambling and coding/decoding a data stream, and performing direct current restoration and adaptive equalization on a received signal.

It should be understood that the foregoing architecture is merely an example for description, and an architecture applicable to the FlexE in this application is not limited thereto. For example, there may be a reconciliation sublayer (reconciliation sublayer, RS) between the MAC sublayer and the time division multiplexing layer, and it is used to provide a signal mapping mechanism between the MII and the MAC sublayer. A forward error correction (forward error correction, FEC) sublayer may further exist between the PCS and the PMA sublayer, to enhance reliability of sent data.

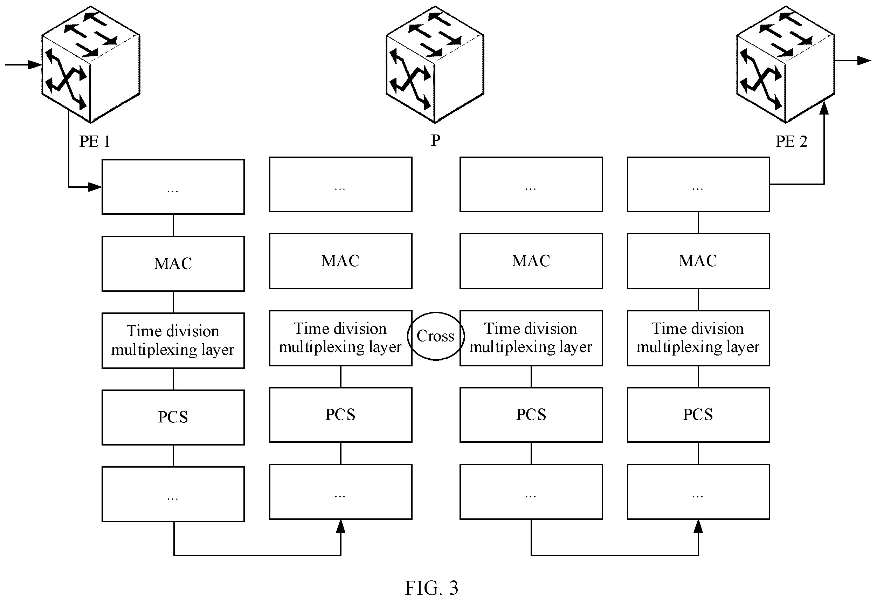

Based on the foregoing architecture, FIG. 3 is a schematic diagram of a FlexE cross (cross) transmission technology applicable to this application.

A provider edge (provider edge, PE) device PE 1 receives, through a user network interface (user network interface, UNI), an Ethernet packet sent by a user, and sends the Ethernet packet. For example, the Ethernet packet is encoded, at a physical coding sublayer, into data blocks of a size of 64B/66B, and these data blocks are mapped to PHYs based on slots. After the mapped data block is processed at a physical layer, an overhead frame (overhead frame) or an overhead multiframe is generated. The overhead frame or the overhead multiframe is transmitted to a service provider (provider, P) device by using a transmission medium (for example, an optical fiber).

After obtaining the overhead frame or the overhead multiframe including the data blocks, the P device sends the overhead frame or the overhead multiframe through a unique output path at a time division multiplexing layer of the P device based on FlexE cross configuration. Therefore, FlexE cross may also be explained as establishing a connection relationship between an input path and an output path.

After receiving the overhead frame or the overhead multiframe, a PE 2 decodes the overhead frame or the overhead multiframe, to obtain the Ethernet packet sent by the PE 1, and sends the Ethernet packet through a UNI of the PE 2.

Data transmission in the FlexE is forwarded and processed at the physical layer, and there is no need to decapsulate data at the MAC sublayer. Therefore, compared with a multi-protocol label switching (multi-protocol label switching, MPLS) manner, a manner of data transmission in the FlexE improves forwarding efficiency.

It should be noted that names of the P device and the PE device are different because locations of the P device and the PE device are different. When the P device obtains a to-be-transmitted Ethernet packet through the UNI, the P device changes to the PE device. Correspondingly, when the PE device is used as a node that performs FlexE cross processing, the PE device changes to the P device.

To improve FlexE transmission reliability, this application provides a communication method. The method is applied to a FlexE cross ring including at least three nodes.

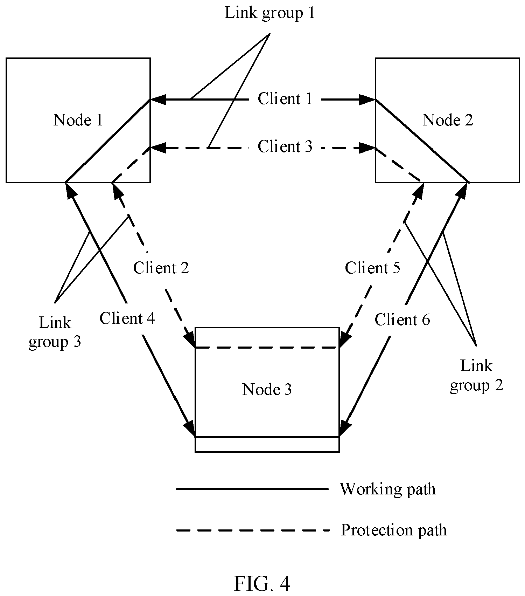

FIG. 4 is a schematic diagram of a FlexE cross ring (namely, a ring Ethernet to which a FlexE cross technology is applied) according to this application. A FlexE group between a node 1 and a node 2 may be referred to as a link group 1, a FlexE group between the node 2 and a node 3 may be referred to as a link group 2, and a FlexE group between the node 3 and the node 1 may be referred to as a link group 3. Each link group carries at least one working path and/or at least one protection path.

The working path described in this application may also be referred to as a working channel, and is a path that is configured by a system and that is used to transmit service data. When the FlexE group carries only the working path, the FlexE group may be referred to as a working FlexE group. The protection path described in this application may also be referred to as a protection channel, and is a backup path of the working path configured by the system, in other words, a path for transmitting the service data in place of the working path when the working path cannot transmit the service data. When the FlexE group carries only the protection path, the FlexE group may be referred to as a protection FlexE group.

The FlexE cross ring shown in FIG. 4 includes three nodes. When no service data is added to the ring, each node is, for example, the P device shown in FIG. 3. The working path and the protection path that are used to transmit data exist between the nodes. The working path and the protection path are data channels based on a physical link (for example, an optical fiber). In addition, the working path and the protection path are bidirectional paths. For example, data may be transmitted from the node 1 to the node 2 through the working path, and the data may also be transmitted from the node 2 to the node 1 through the working path. Different paths correspond to different clients. Therefore, a client identifier may be used to describe the working path or the protection path.

After receiving data through a UNI, a PE node (for example, the node 2) may determine, by searching for a virtual local area network (virtual local area network, VLAN) identifier corresponding to the data, a corresponding FlexE interface (namely, a client) for forwarding. A static path may be preconfigured through a network management device, and a FlexE cross between clients may be configured. It should be noted that, in this case, the node 2 is used as the PE device, and receives data through the UNI.

When transmitting data through a client, a node needs some slots, and these slots are allocated to at least one PHY in a FlexE group. The FlexE cross is a slot cross. For example, there are n slots allocated to a client 1 at a PHY corresponding to the client 1, and there are m slots allocated to a client 4 at a PHY corresponding to the client 4. The node 1 receives, by using the n slots occupied by the client 1, data from the PHY corresponding to the client 1. When forwarding the data to the node 3, the node 1 establishes a FlexE cross between the client 1 and the client 4, and forwards the data to the node 3 by using the m slots occupied by the client 4 and the PHY corresponding to the client 4.

In a default state, the working path and the protection path are in a closed-ring state, a FlexE cross exists between clients corresponding to two working paths, and a FlexE cross also exists between clients corresponding to two protection paths. For example, a FlexE cross exists between the client 1 and the client 4. As shown by a solid line in the node 1 in FIG. 4, data may be transmitted from a working path of the client 1 to a working path of the client 4, or may be transmitted from the working path of the client 4 to the working path of the client 1.

When service data (namely, to-be-sent information) is added to the ring, the node deletes a FlexE cross between two working clients. For example, after the service data is added to the ring on the node 2, the node 2 deletes a FlexE cross between the client 1 and the client 6.

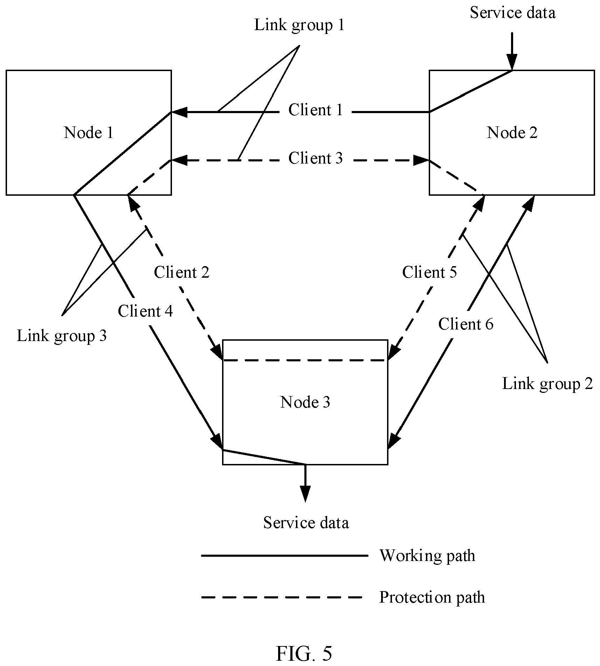

FIG. 5 is a schematic diagram of a method for adding service data to and removing service data from a ring according to this application.

After obtaining the service data through the UNI, the node 2 performs on-ring processing, in other words, deletes a FlexE cross between the client 1 and the client 6, and selects a transmission path based on a destination address of the service data to send the service data. For example, if the destination address of the service data is the node 3, the node 2 may select a transmission path "the node 2→the node 1→the node 3", and send the service data to the node 1 through the client 1.

After receiving the service data through the working path corresponding to the client 1, the node 1 sends the service data through the client 4 based on the FlexE cross between the client 1 and the client 4.

After receiving the service data through the working path corresponding to the client 4, the node 3 performs off-ring processing, in other words, deletes a FlexE cross between the client 4 and the client 6, and sends the service data through a UNI of the node 3.

An on-ring client and an off-ring client of each node may be preconfigured. For example, in the foregoing example, an on-ring client and an off-ring client of the node 2 may be configured as: the client 1, and an on-ring client and an off-ring client of the node 3 may be configured as: the client 4.

After the node 2 obtains the service data through the UNI and determines the transmission path, the node 2 may select the client 1 from a plurality of clients by using a VLAN identifier corresponding to the service data to send the service data. In other words, when the node 2 is used as a sending end, the client 1 is the on-ring client, and when the node 2 is used as a receiving end and receives the service data from another node through the client 1, the node 2 may perform the off-ring processing on the service data, and send the service data through the UNI. In other words, when the node 2 is used as the receiving end, the client 1 is the off-ring client. Correspondingly, after receiving the service data through the client 4, the node 3 performs the off-ring processing on the service data based on the preconfigured on-ring and off-ring clients.

It should be noted that, the on-ring client and the off-ring client of each node are configured when the node 2 is used as a PE node. If the node 2 is no longer used as the PE node, the on-ring client and the off-ring client of each node need to be reconfigured. In other words, on a FlexE cross ring, the on-ring and off-ring clients of each node are in one-to-one correspondence with PE nodes.

In addition, for the PE node, there may be a plurality of open-ring working paths, but there is usually only one closed-ring protection path. For example, in FIG. 5, the node 2 is used as the PE node and is configured with two working paths: "the node 2→the node 1→the node 3" and "the node 2→the node 3". The node 2 is further configured with a protection path, namely, a closed ring shown by a dashed line in FIG. 5.

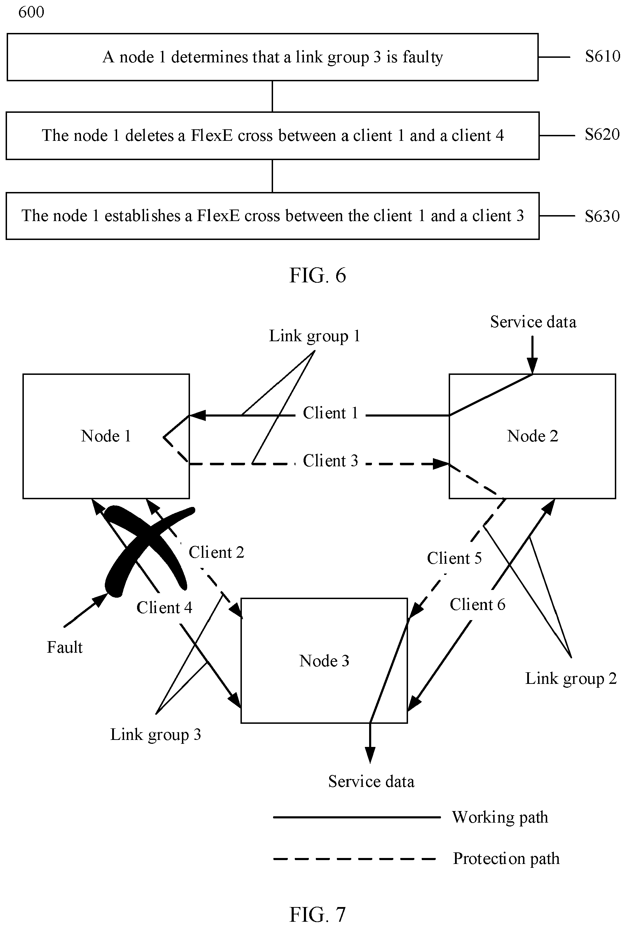

The forwarding procedure described above is a data forwarding procedure when all paths of the FlexE cross ring work normally. If a FlexE group between the node 1 and the node 3 is faulty, the node 1 may perform the method shown in FIG. 6 to complete data forwarding.

As shown in FIG. 6, the method 600 includes the following steps.

S610: A node 1 determines that a link group 3 is faulty.

The node 1 may determine, based on an operation, administration, and maintenance (operation administration and maintenance, OAM) function of a FlexE, that the link group 3 is faulty.

For example, after the node 1 sends an OAM packet to a node 3 through a client 4, if the node 1 does not receive a response message of the OAM packet in N periods, the node 1 determines that the link group 3 is faulty. The OAM packet is used to detect connectivity of a path between nodes.

For another example, if the node 1 does not receive, in N periods, the OAM packet sent by the node 3, the node 1 determines that the link group 3 is faulty.

A method for determining, by the node 1, that a working path and a protection path between the node 1 and the node 3 are faulty is merely an example for description. A specific manner of determining, by the node 1, that the link group 3 is faulty is not limited in this application.

S620: The node 1 deletes a FlexE cross between the client 1 and the client 4.

S630: The node 1 establishes a FlexE cross between the client 1 and the client 3.

The foregoing forwarding procedure is shown in FIG. 7. After receiving service data through the client 3, the node 2 sends the service data through a client 5 based on a FlexE cross between the client 3 and the client 5. After the node 3 receives the service data through the client 5, because the client 5 is a preconfigured off-ring client of the node 3, the node 3 performs off-ring processing, deletes a FlexE cross between the client 5 and the client 2, and sends the service data through a UNI of the node 3.

Because two paths (namely, a working path and a protection path) exist between any two nodes in the FlexE cross ring, regardless of which link group on the FlexE cross ring is faulty, a node on the FlexE cross ring may forward the service data according to the method 600. For example, after a link group between any intermediate node between a sending node and a receiving node and the receiving node is faulty, the intermediate node may return the service data to the sending node through a protection path between two adjacent nodes, and transmit the service data to the receiving node through the sending node, to complete forwarding of the service data. For a FlexE cross ring configured with an E2E protection path, there is only a protection path between the sending node and the receiving node. If the link group between the intermediate node and the receiving node is faulty, because there is no protection path between the intermediate node and the sending node, the intermediate node cannot return the service data to the sending node, and cannot complete forwarding of the service data. Therefore, the FlexE cross ring and an automatic protection switching method based on the FlexE cross ring provided in this application improve reliability of the FlexE cross ring.

The solutions described in FIG. 4 to FIG. 7 are merely examples for description, and the FlexE cross ring applicable to this application may further include more nodes.

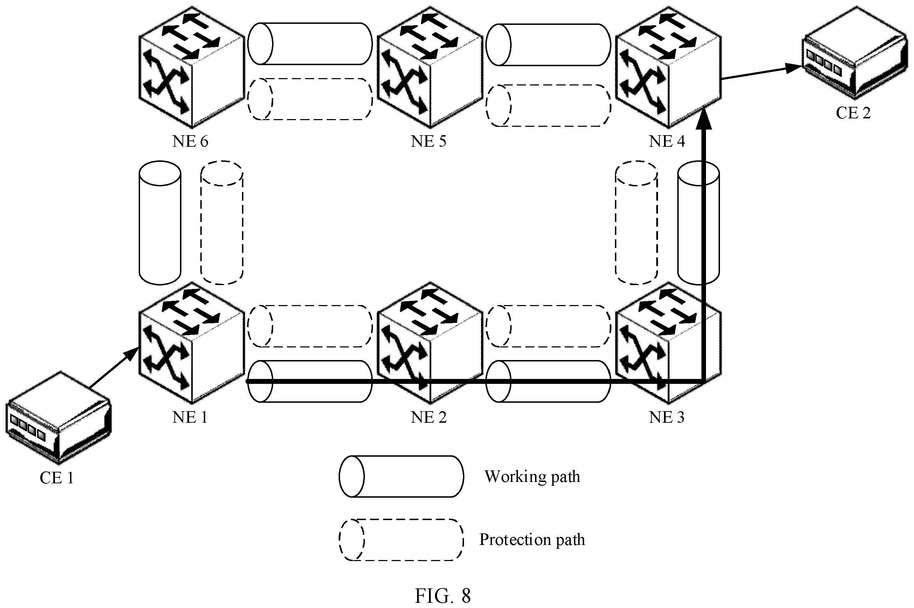

FIG. 8 is a schematic diagram of another FlexE cross ring according to this application.

A Network element (network element, NE) 1, an NE 2, an NE 3, an NE 4, an NE 5, and an NE 6 form a FlexE cross ring. The NE 1 is used as a PE to connect to customer equipment (customer equipment, CE) 1, and the NE 4 is used as another PE to connect to CE 2. The foregoing NE may also be referred to as a node or a network device.

When each path of the foregoing FlexE cross ring is in a normal state, after service data sent by a base station is added to the ring through the NE 1, the service data may be transmitted to the NE 4 for leaving the ring through a transmission path "NE 1→NE 2→NE 3→NE 4".

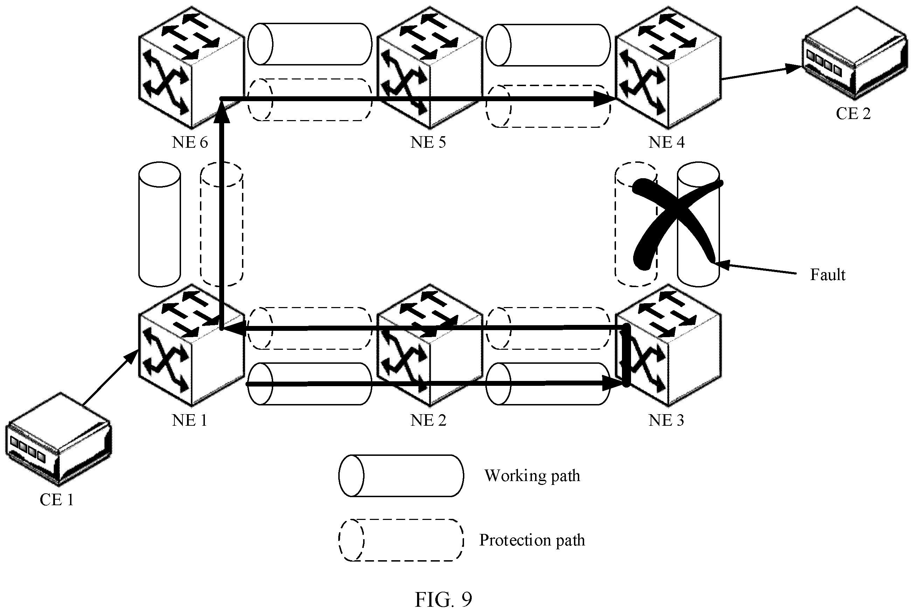

If the NE 3 determines that a FlexE group between the NE 3 and the NE 4 is faulty, the NE 3 may delete a FlexE cross between two working clients of the NE 3, establish a FlexE cross between the working client and a protection client of the NE 3, and transmit the service data to the NE 2 through a protection path between the NE 3 and the NE 2. The NE 2 transmits the service data to the NE 1 through a protection path between the NE 2 and the NE 1 based on a FlexE cross between two protection clients. Finally, the service data is transmitted to the NE 4 for leaving the ring through the transmission path" NE 1→NE 2→NE 3→NE 2→NE 1→NE 6→NE 5→NE 4", as shown in FIG. 9.

It should be understood that the FlexE cross ring shown in FIG. 8 is merely an example for description, and an application scenario of the FlexE cross ring provided in this application is not limited to the scenario shown in FIG. 8.

For example, the FlexE cross ring shown in FIG. 8 may be further applied to a 4^{th} generation (4^{th} generation, 4G) mobile communications system, and the CE 1 may be directly or indirectly connected to a base station (eNB) in the 4G mobile communications system. The FlexE cross ring shown in FIG. 8 may be further applied to a 5^{th} generation (5^{th} generation, 5G) mobile communications system. The CE 1 may be directly or indirectly connected to a base station (gNB) in the 5G mobile communications system.

For another example, the FlexE cross ring shown in FIG. 8 may further be in a multi-layer network architecture, the NE 1 may be connected to an access layer device, and the NE 4 may be connected to an aggregation layer device or a core layer device.

The foregoing examples are merely examples for description, and a future communications system is also applicable to the FlexE cross ring provided in this application.

This application further provides a FlexE cross ring. Each node in the FlexE cross ring has a plurality of working paths and a plurality of protection paths, and the plurality of working paths are in a one-to-one correspondence with the plurality of protection paths.

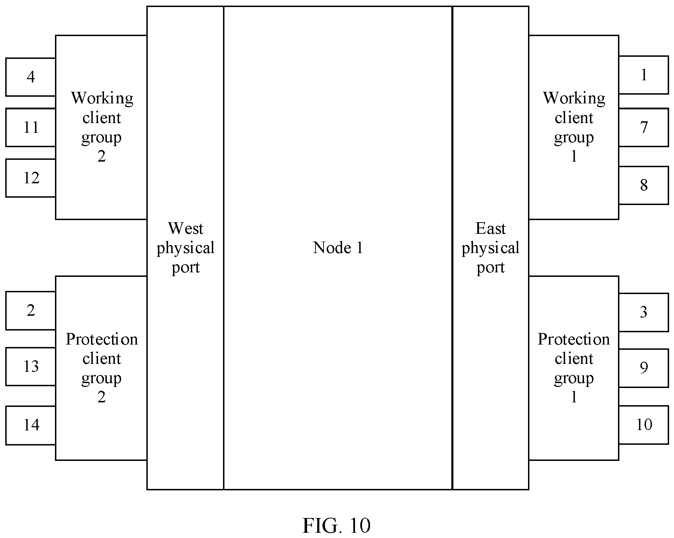

As shown in FIG. 10, a node 1 includes two physical ports (namely, PHYs), which are an east physical port and a west physical port. The node 1 shown in FIG. 10 is merely an example for description, and the node 1 may further include more physical ports.

The east physical port corresponds to six clients: a client 1, a client 3, a client 7, a client 8, a client 9, and a client 10. The client 1, the client 7, and the client 8 are working clients (namely, clients corresponding to the working path), and the client 3, the client 8, and the client 10 are protection clients (namely, clients corresponding to the protection path).

The west physical port corresponds to six clients: a client 2, a client 4, a client 11, a client 12, a client 13, and a client 14. The client 4, the client 11, and the client 12 are working clients, and the client 2, the client 13, and the client 14 are protection clients.

Three working clients of the east physical port are configured as a client group (client group), namely, a working client group 1. Three working clients of the west physical port are configured as another client group, namely, a working client group 2. In this application, a client group may also be referred to as a client bundling group. Three protection clients of the east physical port are configured as a client group, namely, a protection client group 1. The three protection clients of the west physical port are configured as another client group, namely, a protection client group 2.

The foregoing examples of the client group are merely examples for description. A quantity of clients in the client group provided in this application may alternatively be another quantity. For example, two clients are used as one client group, or more clients are used as one client group.

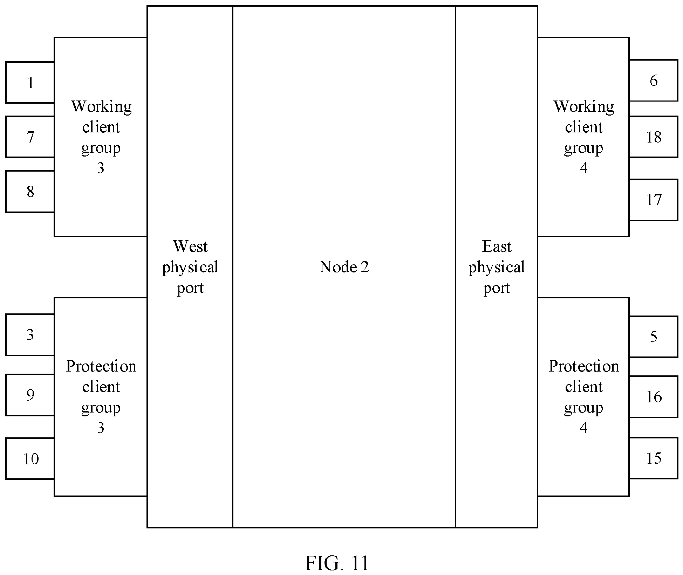

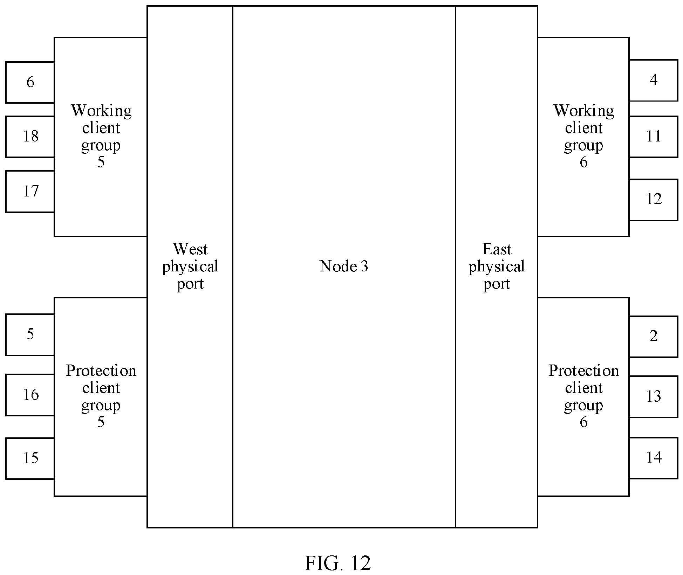

Similarly, a working client group and a protection client group may also be configured for a node 2 and a node 3. FIG. 11 and FIG. 12 show configuration results.

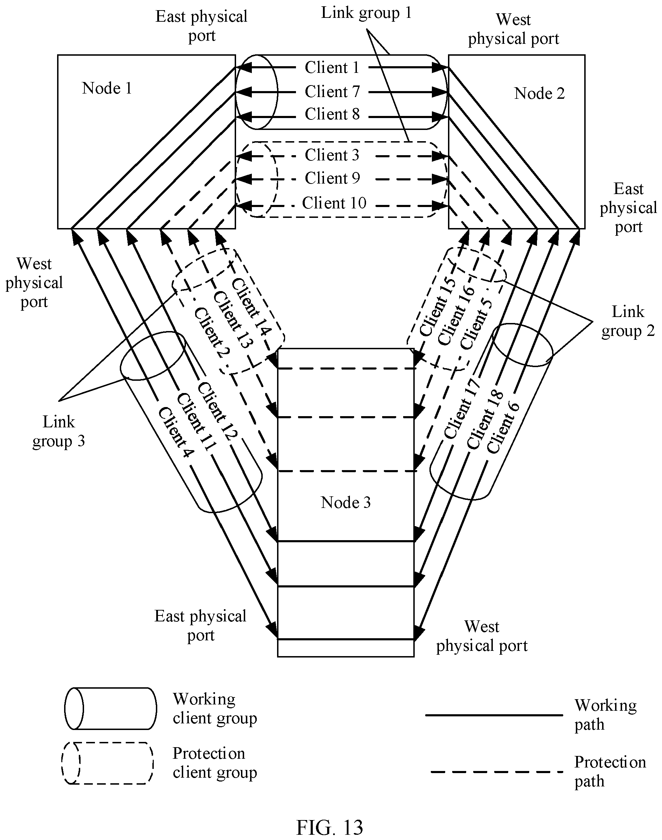

A FlexE cross ring including the node 1 shown in FIG. 10, the node 2 shown in FIG. 11, and the node 3 shown in FIG. 12 is shown in FIG. 13. If a FlexE group corresponding to the west physical port of the node 1 is faulty, the node 1 may delete a FlexE cross between the west physical port and the east physical port, establish a FlexE cross between the working client group and the protection client group of the east physical port, and transmit the service data from the protection client group of the physical port.

Because the node 1 can complete path switching by performing one time of FlexE cross processing on a plurality of working clients and a plurality of protection clients based on the client group, and does not need to perform a plurality of times of FlexE cross processing on each working client and each protection client. Therefore, path switching overheads can be reduced based on the FlexE cross of the client group.

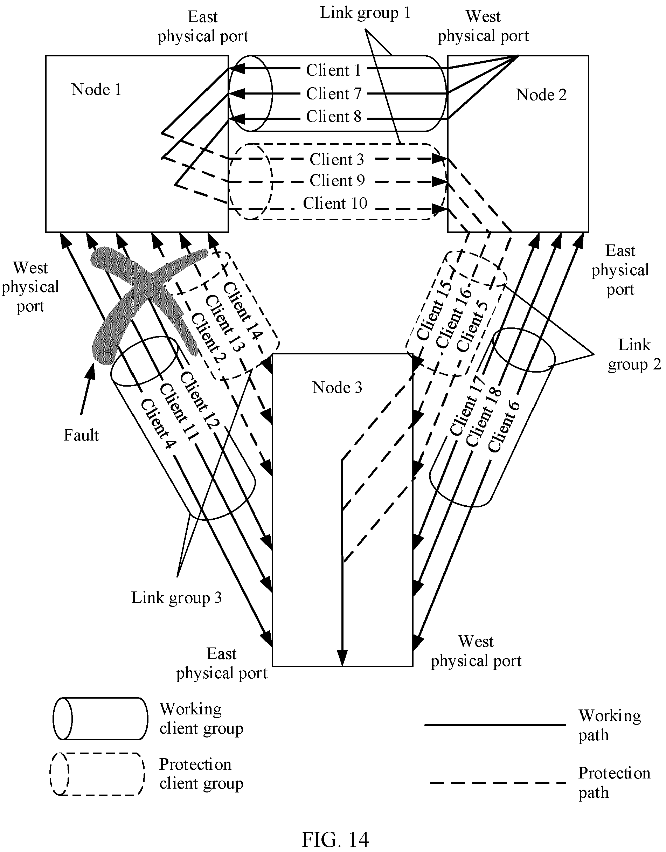

A fault processing result of the FlexE cross ring is shown in FIG. 14, and the node 3 also correspondingly deletes a FlexE cross between a faulty client group and a normal client group.

A person skilled in the art may clearly understand that the FlexE cross ring shown in FIG. 13 and FIG. 14 and a corresponding fault processing method can be applied to FIG. 8, and FIG. 4 or another scenario described in this application is obvious.

This application further provides a method for detecting a fault on a FlexE cross ring. The method is applied to a FlexE cross ring that includes a client group and that is shown in FIG. 13. The method includes the following steps.

The node 1 sends an OAM packet to the node 3 through a working client 4, and the OAM packet is used to detect connectivity of a FlexE group between the node 1 and the node 3.

If the node 1 does not receive a response message of the OAM packet in N (N is a positive integer) periods, the node 1 determines that the FlexE group between the node 1 and the node 3 is faulty, and does not need to send the OAM packet through the client 11 or the client 12, to reduce OAM packet overheads. In addition, because an OAM detection does not need to be configured for each client in a client group, workload of configuring OAM can be reduced by using a FlexE cross ring of the client group.

The foregoing solution is merely an example for description. Alternatively, the node 1 may determine, based on that no OAM packet sent by the node 3 is received in N periods, that the FlexE group corresponding to the west physical port is faulty.

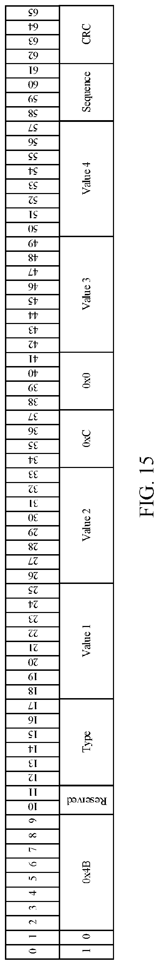

The OAM packet may use a packet format shown in FIG. 15.

In FIG. 15, the OAM packet uses an encoding format of a 66B code block. Digits 0 to 65 in the first row are sequence numbers of 66 bits. The first two bits are overhead bits, and starting from bit 2, eight adjacent bits are divided into one byte, and the following 64 bits are divided into 8 bytes in total.

The first byte (2 to 9) uses 0x4B to indicate a control type of the 66B code block, and is used to identify O code, namely, an ordering control symbol defined in IEEE802.3.

In the second byte (10 to 17), the first two bits are a reserved field (Resv), and the last six bits are a type field (Type), indicating an OAM packet type.

When a value of the type field is 0x1, it indicates that the 66B code block is a BAS code block, and a function of the BAS code block is to detect connectivity of a path. The BAS code block is the second OAM packet described above.

When a value of the type field is 0x2, it indicates that the 66B code block is an APS code block, and a function of the APS code block is to detect and indicate a node to perform automatic protection switching, for example, to delete a FlexE cross between working clients in two directions, and establish a FlexE cross between a working client and a protection client in a same direction. The APS code block is the first OAM packet described above.

The third byte (18 to 25), the fourth byte (26 to 33), the sixth byte (42 to 49), and the seventh byte (50 to 57) are value (Value) fields, which are used to carry OAM values.

In the fifth byte (34 to 41), the first four bits use 0xC as an identifier of an OAM information block.

In the eighth byte (58 to 65), the first four bits represent a sequence (Seq) field, and values of the first four bits may indicate different meanings represented by different code block sequences in a multi-code block packet. In a single code block packet, a sequence field may be filled with an invalid value, for example, 0000. The last four bits of the eighth byte are a cyclic redundancy check (cyclic redundancy check, CRC) field, and are used to check integrity of the foregoing eight bytes (except the CRC field).

The encoding format shown in FIG. 15 is merely an example for description. An encoding format of the OAM packet is not limited in this application. For example, the OAM packet may be encoded by using a 64B encoding format.

The foregoing describes in detail examples of the communication method provided in this application. It can be understood that, to implement the foregoing functions, the communications apparatus includes a corresponding hardware structure and/or software module for performing each function. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this application, the data transmission apparatus may be divided into functional units based on the foregoing method examples. For example, each functional unit may be obtained through division based on a corresponding function, or two or more functions may be integrated into one processing unit. The integrated unit may be implemented in a form of hardware, or may be implemented in a form of a software functional unit. It should be noted that, in this application, unit division is an example, and is merely a logical function division. In an actual implementation, another division manner may be used.

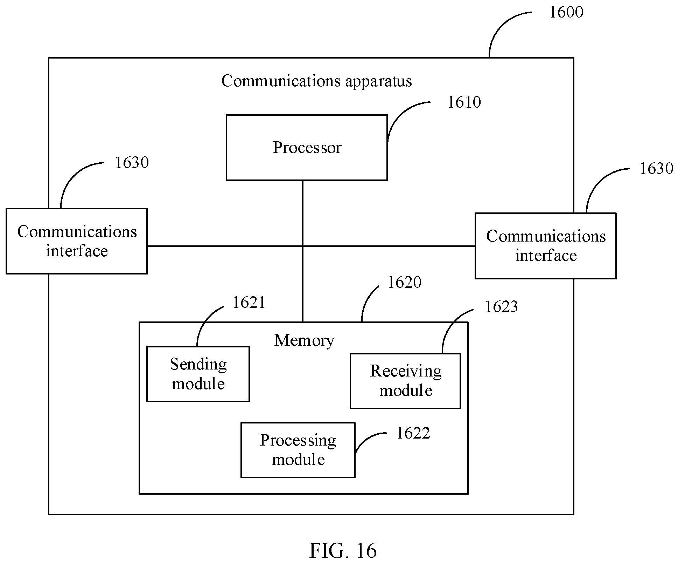

FIG. 16 is a schematic diagram of a communications apparatus according to this application.

The communications apparatus 1600 may be applied to the network architecture shown in FIG. 4 or FIG. 8, for example, may be applied to the node 1 in the network architecture shown in FIG. 4 or the NE 1 in the network architecture shown in FIG. 8. The communications apparatus 1600 may include a processor 1610, a memory 1620 coupled to the processor 1610, and a communications interface 1630. The processor 1610 may be a central processing unit (central processing unit, CPU), a network processor (network processor, NP), or a combination of the CPU and the NP. The processor may further include another hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. The processor 1610 may be one processor, or may include a plurality of processors. The memory 1620 may include a volatile memory (volatile memory), for example, a random-access memory (random-access memory, RAM). The memory 1620 may alternatively include a non-volatile memory (non-volatile memory), for example, a read-only memory (read-only memory, ROM), a flash (flash), a hard disk drive (hard disk drive, HDD), or a solid state disk (solid state disk, SSD). The memory 1620 may further include a combination of the foregoing different types of memories. The memory 1620 may be one memory, or may include a plurality of memories. The memory 1620 stores a computer-readable instruction. The computer-readable instruction may include a plurality of software modules, for example, a sending module 1621, a processing module 1622, and a receiving module 1623. After running the foregoing software modules, the processor 1610 may perform a corresponding operation based on an instruction of each software module. In this embodiment, an operation performed by a software module is actually an operation performed by the processor 1610 according to an indication of the software module. For example, after running the processing module 1622, the processor 1610 performs the following steps:
determining that a third FlexE group is faulty;
deleting a FlexE cross between a first client and a third client; and
establishing a FlexE cross between the first client and a second client.

The processor 1610 may be, for example, the processor in the node 1 shown in FIG. 4, the third FlexE group is, for example, the link group 3 shown in FIG. 4, the first client is, for example, the client 1, the third client is, for example, the client 4, and the second client is, for example, the client 3.

The processor 1610 may further perform, after running the receiving module 1623, the following operation: receiving, through the first client, first FlexE data sent by a second network device. The processor 1610 may further perform, after running the sending module 1623, the following operation: forwarding the first FlexE data to the second network device through the second client.

After a link fault in the third FlexE group is eliminated, the processor 1610 may further perform, after running the processing module 1622, the following operations: deleting the FlexE cross between the first client and the second client, and establishing a FlexE cross between the first client and the third client.

The processor 1610 may further perform, after running the receiving module 1623, the following operations: receiving, through the first client, second FlexE data sent by the second network device, and forwarding the second FlexE data to the third network device through the third client.

The second network device may be, for example, the node 2 shown in FIG. 4, and the third network device may be, for example, the node 3 shown in FIG. 4.

The third FlexE group is used to carry at least two clients, the at least two clients form a client bundling group, the client bundling group includes the third client and a fourth client, the third client deploys an OAM detection, and the fourth client does not deploy the OAM detection. The processor 1610 may further perform, after running the processing module 1622, the following operation: determining, based on the OAM detection deployed by the third client, that the third FlexE group is faulty.

The apparatus embodiment completely corresponds to the method embodiment. The steps in the method embodiment are performed by corresponding modules in the apparatus embodiment. For example, the communications interface performs the receiving step and the sending step in the method embodiment, and other steps other than the sending and receiving steps may be performed by the processor. For a function of a specific module, refer to the corresponding method embodiment. Details are not described again.

It should be understood that sequence numbers of the foregoing processes do not mean execution sequences in the embodiments of this application. The execution sequences of the processes should be determined based on functions and internal logic of the processes, and should not be construed as any limitation on the implementation processes of this application.

In addition, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A communication method, applied to a ring network, wherein the ring network is a flexible Ethernet FlexE cross ring, the FlexE cross ring comprises a first network device, a second network device, and a third network device, the first network device is adjacent to the second network device, the first network device is adjacent to the third network device, there are a first FlexE group and a second FlexE group between the first network device and the second network device, the first FlexE group is used to carry a first client, the second FlexE group is used to carry a second client, there is a third FlexE group between the first network device and the third network device, and the third FlexE group is used to carry a third client; and
the method comprises:
determining, by the first network device, that the third FlexE group is faulty;
deleting, by the first network device, a FlexE cross between the first client and the third client; and
establishing, by the first network device, a FlexE cross between the first client and the second client.

2. The method according to claim 1, wherein the method further comprises:
receiving, by the first network device through the first client, first FlexE data sent by the second network device; and
forwarding, by the first network device, the first FlexE data to the second network device through the second client.

3. The method according to claim 1 or 2, wherein after a link fault of the third FlexE group is eliminated, the method further comprises:
deleting, by the first network device, the FlexE cross between the first client and the second client; and
establishing, by the first network device, a FlexE cross between the first client and the third client.

4. The method according to claim 3, wherein the method further comprises:
receiving, by the first network device through the first client, second FlexE data sent by the second network device; and
forwarding, by the first network device, the second FlexE data to the third network device through the third client.

5. The method according to any one of claims 1 to 4, wherein the third FlexE group is used to carry at least two clients, the at least two clients form one client bundling group, the client bundling group comprises the third client and a fourth client, the third client deploys an operation, administration, and maintenance OAM detection, and the fourth client does not deploy the OAM detection; and
the determining, by the first network device, that the third FlexE group is faulty comprises:
determining, by the first network device based on the OAM detection deployed by the third client, that the third FlexE group is faulty.

6. A communications apparatus, applied to a ring network, wherein the ring network is a flexible Ethernet FlexE cross ring, the FlexE cross ring comprises the first network device, a second network device, and a third network device, the first network device is adjacent to the second network device, the first network device is adjacent to the third network device, there are a first FlexE group and a second FlexE group between the first network device and the second network device, the first FlexE group is used to carry a first client, the second FlexE group is used to carry a second client, there is a third FlexE group between the first network device and the third network device, and the third FlexE group is used to carry a third client; and the communications apparatus is configured in the first network device, and comprises:
a memory, wherein the memory comprises a computer-readable instruction; and
a processor connected to the memory, wherein the processor is configured to execute the computer-readable instruction, to perform the following operations:
determining that the third FlexE group is faulty;
deleting a FlexE cross between the first client and the third client; and
establishing a FlexE cross between the first client and the second client.

7. The apparatus according to claim 6, wherein the processor is further configured to perform the following operations:
receiving, through the first client, first FlexE data sent by the second network device; and
forwarding the first FlexE data to the second network device through the second client.

8. The apparatus according to claim 6 or 7, wherein after a link fault of the third FlexE group is eliminated, the processor is further configured to:
delete the FlexE cross between the first client and the second client; and
establishing a FlexE cross between the first client and the third client.

9. The apparatus according to claim 8, wherein the processor is further configured to:
receive, through the first client, second FlexE data sent by the second network device; and
forward the second FlexE data to the third network device through the third client.

10. The apparatus according to any one of claims 6 to 9, wherein the third FlexE group is used to carry at least two clients, the at least two clients form one client bundling group, the client bundling group comprises the third client and a fourth client, the third client deploys an operation, administration, and maintenance OAM detection, and the fourth client does not deploy the OAM detection; and
the processor is specifically configured to:
determine, based on the OAM detection deployed by the third client, that the third FlexE group is faulty.

11. A computer-readable storage medium, wherein the computer-readable storage medium stores an instruction, and when the instruction is run on a computer, the computer is enabled to perform the method according to any one of claims 1 to 5.

12. A network device, comprising the communications apparatus according to any one of claims 6 to 10.

13. A network device, configured to perform the method according to any one of claims 1 to 5.
